# EUROPEAN PATENT SPECIFICATION

(11) **EP 1 132 252 B1**
(45) Date of publication and mention of the grant of the patent: **15.12.2004**
(21) Application number: 01101810.8
(22) Date of filing: 26.01.2001
(51) Int. Cl.: B60N 2/08

(54) **Vehicle seat slide device**
Gleitschiene für Kraftfahrzeugsitz
Glissière pour siège de véhicule

(30) Priority: 17.02.2000 JP 2000039137
(43) Date of publication of application: 12.09.2001
(73) Proprietor: Ikeda Bussan Co., Ltd., Ayase-shi Kanagawa-ken (JP)
(72) Inventor: Yoshida, Tomonori, c/o Ikeda Bussan Co., Ltd., Ayase-shi, Kanagawa-ken (JP); Fujimoto, Ryo, c/o Ikeda Bussan Co., Ltd., Ayase-shi, Kanagawa-ken (JP); Eguchi, Moriyuki, c/o Ikeda Bussan Co., Ltd., Ayase-shi, Kanagawa-ken (JP)
(74) Representative: Grünecker, Kinkeldey, Stockmair & Schwanhäusser Anwaltssozietät

(56) References cited:
- EP-A- 0 615 879
- GB-A- 2 110 080
- US-A- 5 425 522

## Description

This invention relates to a vehicle seat slide device for a vehicle body according to the preamble of claim 1.

Such a vehicle seat slide device for a vehicle is known from US-A-5 425 522. Said document discloses an elongated lower guide rail and an upper slide rail, which slide relative to one another. The vehicle seat slide device further comprises a slide locking mechanism, which includes a latch element. The latch element engages selectively corresponding lock holes of the rail body. A linkage couples the latch element and the actuator segment of the lock shaft for a transverse movement. A spring is connected to a lever for urging the lever in a locked position.

Virtually, all modern vehicles such as one-box cars or van-type vehicles are provided with seat slide devices which are mounted in a wide space behind a front seat for allowing one or plural rear seats to adjustably slide thereon in the fore and aft directions of the vehicle. Typically, the seat slide device includes an elongated lower guide rail mounted on a floor in a load carrying space of the vehicle in a longitudinal direction thereof, and an upper slide rail firmly fixed to the bottom of a vehicle seat and slidably fitted in the lower guide rail.

Commonly, a seat reclining mechanism has a base that is mounted on the lower guide rail. The seat reclining mechanism also has an arm on which a seat back is mounted. The seat back can be folded down forwardly and moveable in fore and aft positions. In some cases, a rear side of the seat back may be used as a table.

In such a vehicle, the lower guide rail has a first horizontal region in which a number of seats or rows of seats may be mounted, and a second horizontal region in which the seats may not be mounted. A lock mechanism has been proposed, which has interlocking components coupled to the upper slide rail to releasably maintain the seat in its locked position to prevent undesired movement of the seat to the second region.

Japanese Patent Application Laid-Open Publication No.H9-95163 discloses a vehicle seat device provided with a seat slide lock mechanism including a latch member and interlock member.

In this publication, the lock mechanism includes a slide lock mechanism and an interlocking mechanism, both of which are associated with the seat slide device. The slide lock mechanism has a plurality of slide lock holes formed at selected locations of the lower guide rail, that has a plurality of interlocking holes forming part of the interlocking mechanism. The slide lock mechanism also has a slide lock clutch that engages selected ones of the slide lock holes, and a manual lever connected to the slide lock clutch through a wire. The interlocking mechanism also has an interlocking clutch that is connected to the reclining mechanism coupled to the seat back through a wire and engages selected one of the interlocking holes. The slide lock clutch is urged in a locked position by a spring, and, likewise, the interlocking clutch is also urged in an interlocked position by a spring. The slide lock clutch is unlocked by operating the manual lever, and the interlocking clutch is unlocked when the seat is folded down forwardly, thereby allowing fore and aft movements of the seat with the upper slide rail.

In the event that the conventional seat slide device is longitudinally formed in a manner as noted above, however, fabrication of various components is extremely troublesome, and undesired cranky or unsteady conditions owing to poor dimensional accuracy are caused in the seat slide device, resulting in poor sliding movement of the upper slide rail. Further, if the seat slide device is so fabricated as to have a greater strength that resists the load, then, the weight of the seat slide device adversely increases. Also, in the event that the seat slide device is mounted on to the floor panel of the vehicle body, dusts on the floor panel tends to enter the inside of the lower guide rail through the guide groove thereof, inducing a serious difficulty in sliding movement of the upper slide rail. Thus, it was difficult to provide an improved seat slide device that properly support the weight of a seat occupant with a simple structure and low manufacturing cost.

In such a seat slide device discussed above, also, since the slide locking mechanism and the interlocking mechanism have specific designs in which lock holes and an interlocking hole are formed on the same plane on a bottom wall of the lower guide rail, and in which a latch element and an interlocking member are vertically moved upward or downward into or from the lock holes and the interlocking hole, respectively, undesired lateral or vertical, cranky movement of the upper slide rail can not be prevented.

Accordingly, it is an object of the present invention to provide a vehicle seat slide device having an improved slide locking mechanism which is simple in construction, easy to manufacture, easy to install, highly reliable in sliding movement, free from extraneous substances or dusts, free from cranky movement of an upper slide rail relative to a lower guide rail to provide a highly improved maneuverability, and low in manufacturing cost.

The above and other objects of the invention are achieved by a vehicle seat slide device for a vehicle body according to claim 1. Preferred embodiments are claimed in the dependent claims.

To achieve the above objects, the present invention provides a vehicle seat slide device that includes an elongated lower guide rail that is firmly fixed to a floor of a vehicle body in a longitudinal direction thereof, and an upper slide rail firmly secured to a seat body and slidably guided by the lower guide rail.

The elongated lower guide rail has a substantially upwardly opening C-channeled rail body, a pair of side walls upwardly extending from lateral distal ends of the rail body, and a pair of upper guide walls inwardly extending from respective upper ends of the side walls to form an elongated guide groove. At least one of the side walls of the rail body has a plurality of lock holes. The upper slide rail has a substantially downwardly opening C-channeled slide body which is slidably accommodated in the lower guide rail, and a vertical wall standing upright from a center of the slide body and extending upward through the elongated guide groove of the lower guide rail. The seat slide device also includes a slide locking mechanism that includes a lock shaft extending through the upper slide rail and pivotally supported thereby, with the lock shaft having a lower end formed with an actuator segment, and a latch element supported by a lower surface of a bottom wall of the upper slide rail in resilient abutting contact therewith. The latch element is coupled to the actuator segment of the lock shaft by a linkage such as a pivot. An actuating lever is fixed to an upper end of the lock shaft and a spring is connected to the actuating lever to forcibly urge the lock shaft into a locked position. Releasing the actuating lever against the action of the spring causes the actuator segment of the lock shaft to rotate to release the latch element from the lock holes in an unlocked position.

Other and further features, advantages, and benefits of the invention will become more apparent from the following description taken in conjunction with the following drawings. It is to be understood that the foregoing general description and the following detailed description are exemplary and explanatory but are not to be restrictive of the invention. The accompanying drawings which are incorporated in and constitute a part of the invention, illustrate embodiments of the invention and, together with the description, serve to explain the principles of the invention in general terms. Like numerals refer to like parts throughout the disclosure.
Fig. 1 is a schematic cross sectional view of a preferred embodiment of a vehicle seat slide device according to the present invention;
Fig. 2A is an enlarged perspective view of an elongated lower guide rail of the vehicle seat slide device of Fig. 1;
Fig. 2B is across sectional view of the lower guide rail of Fig. 2A;
Fig. 3 is an exploded perspective view of the vehicle seat slide device shown in Fig. 1;
Fig. 4 is an enlarged plan view of the vehicle seat slide device shown in Fig. 1, certain parts being cut away for clarity;
Fig. 5 is an enlarged exploded view of an upper slide rail and a slide locking mechanism of the vehicle seat slide device of Fig. 1;
Fig. 6 is an enlarged cross sectional view illustrating a relationship between the upper slide rail and the slide locking mechanism of the vehicle seat slide device;
Fig. 7 is a plan view illustrating a locked condition of the slide locking mechanism of the vehicle seat slide device according to the present invention; and
Fig. 8 is a plan view illustrating an unlocked condition of the slide locking mechanism of the seat slide device according to the present invention.

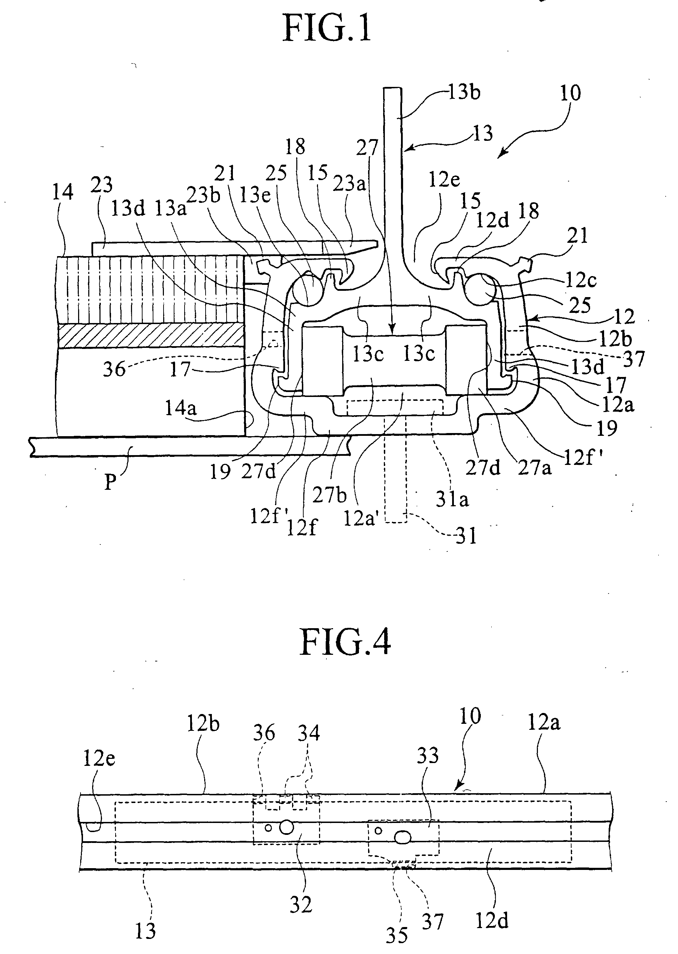

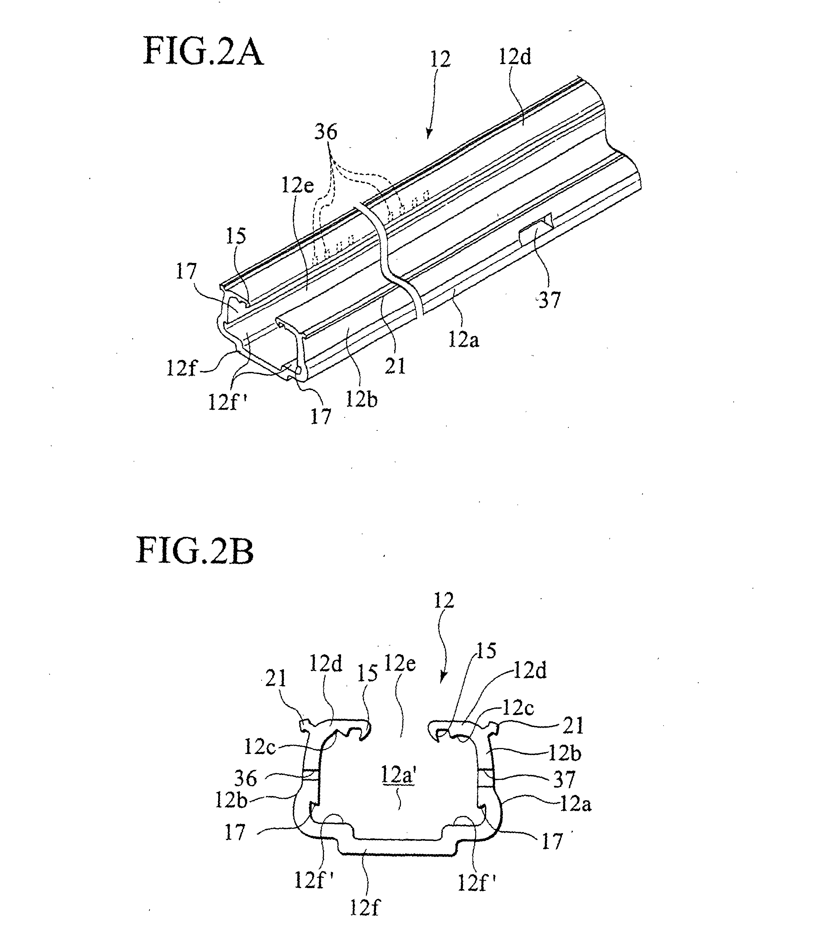

Referring now to Figs. 1, 2A and 2B, there is shown a preferred embodiment of a vehicle seat slide device according to the present invention. The vehicle seat slide device 10 is usually mounted onto a vehicle structure such as a floor panel P of a vehicle body to moveably support the vehicle seat in a longitudinal direction, i.e., fore and aft directions of the vehicle body.

In Figs. 1,2A and 2B, the vehicle seat slide device 10 includes an elongated lower guide rail 12 serving as a lower truck, and an upper slide rail 13 slidably fitted in the lower guide rail 12, which serves as a second truck for relative movement in fore and aft directions. Each of the lower and upper rails 12 and 13 may include a single elongated piece of extruded aluminum or magnesium, or a single elongated piece of hard plastic formed by injection molding. The elongated lower guide rail 12 is shown as being located in a cutout 14a of a floor carpet 14, but may be firmly secured to a suitable part(not shown)of the vehicle body by means of mounting brackets. On the contrary, the upper slide rail 13 is fixedly secured to a bottom wall of a seat body of a vehicle seat (not shown).

The elongated lower guide rail 12 includes a substantially upwardly opening C-channeled rail body 12a, a pair of vertical side walls 12b, 12b upwardly extending from lateral distal ends of the rail body 12a to provide an elongated cavity 12a', a pair of substantially rounded slider rest portions 12c, 12c formed on inner surfaces of respective upper ends of the side walls 12b, 12b, and a pair of upper guide walls 12d, 12d inwardly bent from the upper ends of the side walls 12b, 12b to define an elongated guide groove 12e.The rail body 12a has a horizontal center bottom wall 12f and a pair of planar stepped segments 12f', 12f' laterally extending outward from both distal ends of the bottom wall 12f to be contiguous with the side walls 12b, 12b. One of the pair of substantially rounded slider rest portions 12c, 12c has a V-shaped groove for positioning its corresponding slider 25. The stepped segments 12f', 12f' serves as trucks for supporting a roller which will be discussed below.

The upper slide rail 13 includes a substantially downwardly opening C-channeled slide body 13a that is slidably fitted in the lower guide rail 12. The slide body 13a includes a vertical wall 13b standing upright from the center line of the slide body 13a and upwardly extending through the elongated guide groove 12e of the lower guide rail 12, bifurcated upper side walls 13c, 13c laterally extending from a lower end of the vertical wall 13b, and downwardly extending lower side walls 13d, 13d having their respective upper ends contiguous with lateral distal ends of the upper walls 13c, 13c. The slide body 13a also has a pair of substantially rounded slider rest shoulders 13e, 13e that face the corresponding slider rest portions 12c, 12c of the lower guide rail 12. A slide locking mechanism is located between the lower guide rail 12 and the upper slide rail 13 in a manner as will be discussed later.

As shown in Figs. 1, 2A and 2B, the rail body 12a of the elongated lower guide rail 12 has its upper guide walls 12d, 12d formed at their inner distal ends with first hook segments 15, 15 that define the elongated guide groove 12e. Second hook segments 17, 17 are formed on respective inner sides of the side walls 12b, 12b at locations near respective lower ends of the vertical side walls 12b, 12b. The first hook segments 15, 15 are defined by inwardly angulated portions formed at inner edges of respective upper guide walls 12d, 12d along the elongated guide groove 12e, respectively. On the contrary, the second hook segments 17, 17 are defined by downwardly extending edges formed near the lower ends of the respective vertical side walls 12b, 12b. In addition, a pair of finisher mounting segments 21, 21 are formed by outwardly and obliquely extending projections formed in the vicinities of junctions between the vertical side walls 12b, 12b and the upper guide walls 12d, 12d.These finisher mounting segments 21, 21 are coupled to finishers 23, 23 which are secured to a floor panel 14.The seat slide device 10 may be used as a usual seat position adjusting device mounted on to the floor panel 14 by means of mounting brackets.

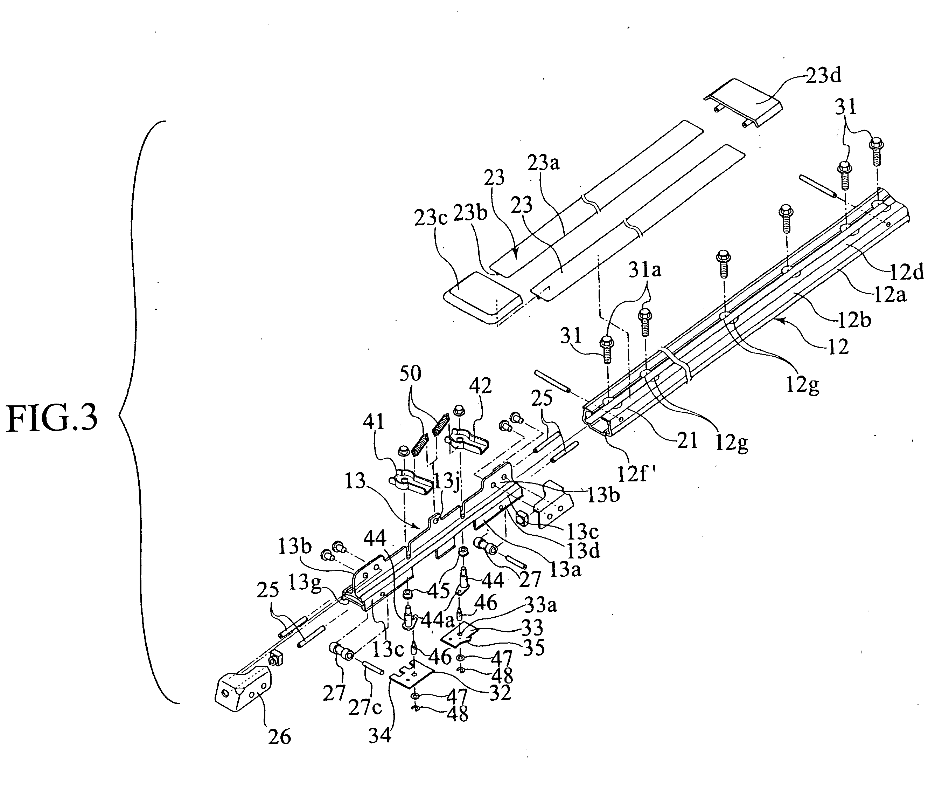

As shown in Figs. 1 and 3, the finishers 23, 23 are formed by plastic and include elongated soft lip portions 23a, 23a, respectively, that are formed at elongated inner edges of the finishers 23, 23, respectively. The finishers 23, 23 have their rear sides formed with engaging segments 23b, 23b, respectively. The engaging segments 23b, 23b serve to engage the respective finisher mounting segments 21, 21 of the lower guide rail 12. In this manner, the soft lip portions 23a, 23a of the respective finishers 23, 23 are held in sliding contact with both sides of the vertical wall 13b of the upper slide rail 13, thereby shielding the elongated guide groove 12e defined by the upper guide walls 12d, 12d of the lower guide rail 12 from dusts appearing on the floor panel 14.The finishers 23, 23 have front and rear ends coupled to end caps 23c, 23d, respectively, that are fixedly mounted on the structural portion of the vehicle body.

Turning now to Fig. 1, the upper slide rail 13 has a pair of first upwardly extending engaging segments 18, 18 formed on the respective upper surfaces of the upper side walls 13c, 13c in the vicinities of the slider rest shoulders 13e, 13e of the slide body 13a to engage the corresponding first hook segments 15, 15 of the lower guide rail 12. The first engaging segments 18 include upwardly extending projections. Likewise, the slide body 13a also has second engaging segments 19, 19 formed at respective lower ends of the lower side walls 13d, 13d to engage the corresponding second hook segments 17, 17 of the lower guide rail 12.

The second engaging segments 19, 19 are defined by outwardly and slightly, upwardly angulated projections formed at respective lower ends of the vertical side walls 13d, 13d.The first engaging segments 18, 18 of the slide body 13a form parts of the rounded slider rest shoulders 13e, 13e formed near the upper lateral distal ends of the respective upper side walls 13c, 13c.

Sliders 25, 25 are operatively disposed between the slider rest portions 12c, 12c of the lower guide rail 12 and the corresponding slider rest shoulders 13e, 13e of the upper slide rail 13. As seen in Figs. 1 and 3, a pair of rollers 27 are disposed at fore and aft positions between the planar stepped segments 12f', 12f' of the bottom wall 12f of the lower guide rail 12 and the upper side walls 13c, 13c of the upper slide rail 13 for smooth sliding movement in fore and aft directions of the vehicle body. Each of the rollers 27 has a roller shaft 27c composed of a central shaft portion.

As shown in Fig. 1, each of the rollers 27 has a pair of large diameter shaft portions 27a and a central small diameter shaft portion 27b. The large diameter portions 27a of the roller 27 are placed in rolling contact with the planar stepped segments 12f', 12f'of the bottom wall 12f of the rail body 12a, thereby providing a wide space between the bottom wall 12f of the rail body 12a and the central shaft portion 27b of the roller 27. With this arrangement, head portions 31a of fastener bolts 31 do not interfere with the roller 27 during movement thereof when the bolts 31 are fastened to the floor panel of the vehicle body.

As shown in Fig. 3, the roller 27 has a center bore through which a shaft 27c extends and has its both ends supported by the lower side walls 13d, 13d of the upper slide rail 13 for smooth rotation of the roller 27. As seen in Fig. 1, the roller 27 has its outermost end walls 27d, 27d held in sliding contact with or in proximity with the lower side walls 13d, 13d of the upper slide rail 13. Under this circumstance, even if the vertical wall 13b is subjected to a strong upward jerk, the lower side walls 13d, 13d of the upper slide rail 13 are prevented from being inwardly deformed.

As seen in Fig. 3, the lower guide rail 12 has a plurality of cutouts 12g, 12g formed at desired locations spaced in the longitudinal direction of the lower guide rail 12 to provide ease of access of the fastening bolts 31. The bolts 31 are secured to the floor panel of the vehicle body to fixedly support the lower guide rail 12 on the floor panel. The seat slide device 10 also includes front and rear mounting brackets 26 for mounting the front and rear ends of the lower guide rail 12 on to the floor panel of the vehicle body, with only front bracket 26 being shown in Fig. 3.

As best shown in Figs. 2A and 2B, one of the side walls 12b of the rail body 12a has a series of laterally extending latching apertures 36 formed at given locations along a length of the lower guide rail 12 and serving as latch holes. On the other hand, the other one of the side walls 12b of the rail body 12a has a laterally extending interlocking hole 37 serving as an interlocking hole.

As seen in Fig. 3, the slide locking mechanism includes a lock device including a latch plate or latch element 32, and an interlocking device including an interlocking member 33.

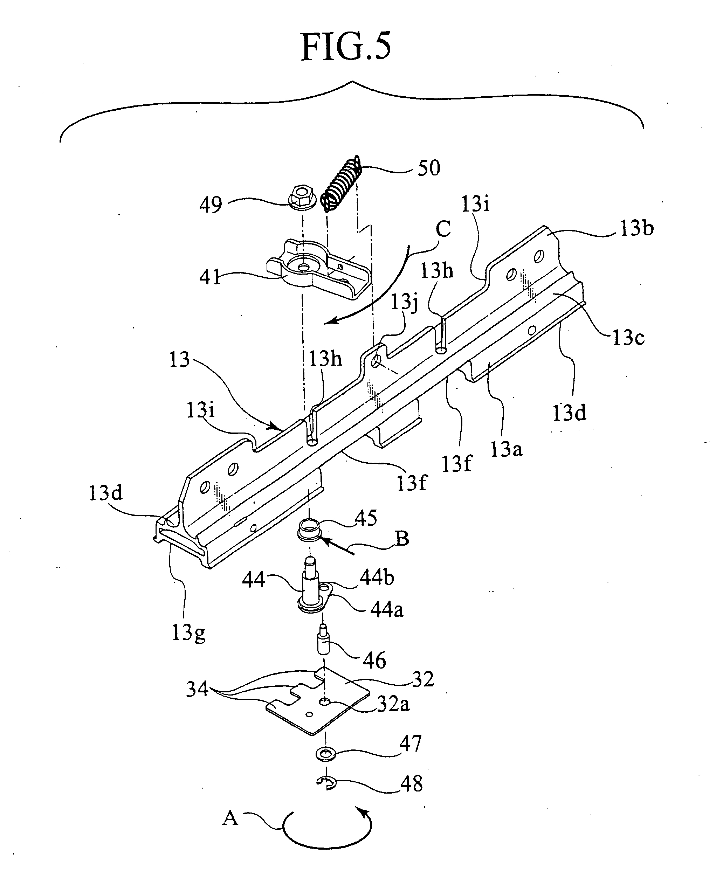

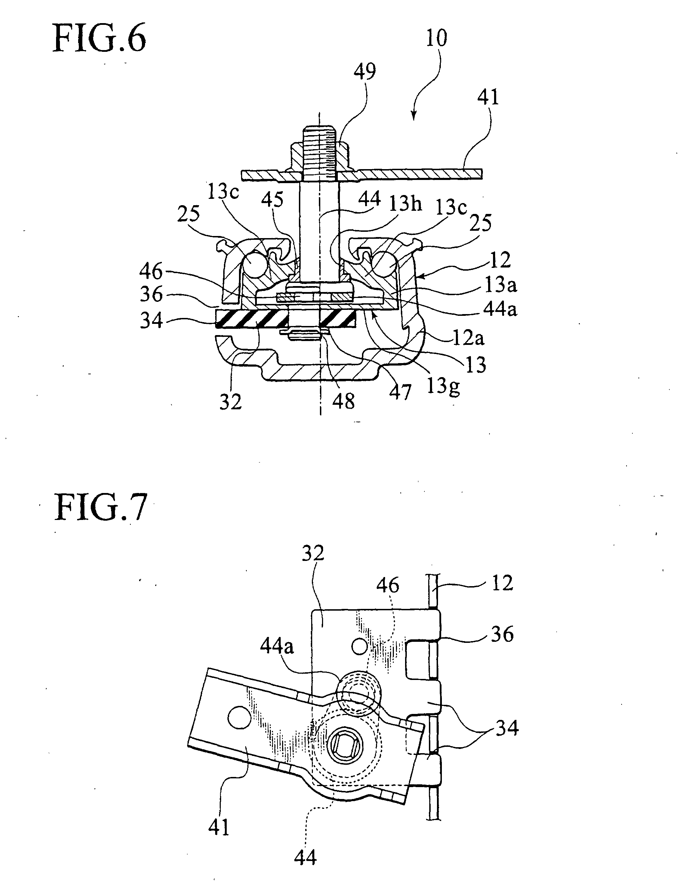

As best seen in Fig. 5, first and second lower planar cutouts 13f, 13f are formed in the same plane on the bottom wall 13g of the slide body 13a and are spaced from one another for a given distance in a longitudinal length of the slide body 13a.The cutouts 13f, 13f have the substantially same width as the latch plate 32 to moveably receive the latch plate 32. One of the cutouts 13f, 13f has a height to allow smooth forward or rearward movements of the latch plate 32 toward the latching apertures 36 when it is located in the cutout 13f such that the latch plate 32 is horizontally aligned with a center of each latching apertures 36 of the rail body 12a as shown in Fig. 6. The slide body 13a also has first and second through-bores 13h,13h that vertically extend through the vertical wall 13b and have axes in alignment with the planar cutouts 13f, 13f. The slide body 13a also has first and second upper cutouts 13i, 13i formed in the vertical wall 13b of the slide rail 13a in vertical alignment with the first planar cutouts 13f, 13f. The slide body 13a further has a slot 13j formed in the vertical wall 13b between the second cutouts 13i, 13i. The upper slide rail 13 also has guide slots(not shown) formed on the bottom wall 13g of the rail body 13a in offset relation from the axes of the through-bores 13h, 13h. The first and second cutouts 13f, 13f and 13i, 13i, and the slot 13j form part of the slide locking mechanism.

In Figs. 5 and 6, the slide locking mechanism includes the latch plate 32 which has a center bore 32a and a latching pawl composed of latching teeth 34. The slide locking mechanism further includes a rivet lock or pivot 46 that is inserted through the center bore 32a of the latch plate 32 from the rear side thereof, a lock shaft 44 vertically extending through the through-bore 13h and pivotally supported by the upper slide rail 13, a first actuating lever 41 that is connected through a linkage to a handle (not shown), and a spring 50 for forcibly urging the actuating lever 41 to a locked position. The lock shaft 44 has a transversely extending tongue-shaped actuator segment 44a having a mount bore 44b and serving as a rotating arm. The rivet lock 46 is inserted through the center bore 32a of the latch plate 32 from the rear side thereof into the mount bore 44b of the actuating segment 44a, and, then, an upper end of the rivet lock 46 is fixed to the actuator segment 44a of the lock shaft 44.The rivet lock 46 is inserted through the center bore 32a of the latch plate 32 and has a lower end fitted with a wave washer 47 and an E-ring 48 such that an upper surface of the latch plate 32 is resiliently held in contact with a lower end surface of the bottom wall 13g of the slide body 13a. As best seen in Fig. 6, a substantially lower half portion of the lock shaft 44 and a linking portion of the rivet lock 46 of the slide locking mechanism are accommodated within the slide body 13a of the upper slide rail 13 to prevent entry of extraneous substances or dusts into an area around the actuator segment 44a and the rivet lock 46.

During assembly, the lock rivet or the rivet lock 46 is guided through the guide slot formed in the bottom wall 13g of the upper slide rail 13 and is located in a pivotal condition. The latch plate 32 is pivotally supported by the rivet lock 46 serving as the pivot or a linkage pin as shown in Figs. 5 and 7. As best seen in Fig. 6, a bush 45 is tightly fitted to the through-bore 13h of the slide body 13a to pivotally support the lock shaft 44. Further, the lock shaft 44 has an upper threaded end to which the first actuating lever 41 is fixed by a nut 49. As shown in Fig. 5,a spring 50 is interconnected between the actuating lever 41 and the slot 13j of the slide rail 13a, thereby forcibly urging the actuating lever 41 toward a locked position.

Turning now to Fig. 3, the interlocking device has the same structure as the lock device except for the interlocking member 33. The interlocking device includes a rivet lock or pivot 46 having its lower end inserted through a center bore 33a of the interlocking member 33. The interlocking member 33 is held in fixed place in the lower cutout 13f of the slide body 13a by a wave washer 47 and an E-ring 48 such that the interlocking pawl 35 of the interlocking member 33 is horizontally aligned with the interlocking hole 37 of the rail body 12a. The interlocking device further includes a second actuating lever 42 which is fixedly secured to an upper threaded end of the lock shaft 44 by a nut 49. A second spring 50 is interconnected between the second actuating lever 42 and the slot 13j of the slide body 13a to forcibly urge the second actuating lever 42 in an interlocked position.

The upper slide rail 13 thus arranged is slidably fitted to the lower guide rail 12 in a manner as shown in Fig. 3. A pair of seat slide devices 10 thus assembled are laterally spaced from each other and fixedly mounted in a longitudinal direction of the vehicle body on to the floor panel of the vehicle body by means of mounting brackets 26. A seat body is fixedly secured to the upper slide rail 13 by means of brackets (not shown). The actuating lever 41 connected to the handle (not shown) provided at one side of the seat body by a linkage (not shown). The actuating lever 42 is connected to an arm (not shown) fixed to the side of a seat back (not shown) of the seat body and is operated by the arm moved by the seat back when it is folded back forward to release the interlocking member 33 into the unlocked condition.

In operation, the slide locking mechanism is actuated such that the lock device is held in the locked position as shown in Fig. 6. Namely, in Fig. 6, the latching teeth of the latch plate 32 transversely protrudes through the latching apertures 36 such that the lock device is maintained in the locked position. Under this circumstance, the lock shaft 44 of the lock device is forced to rotate counterclockwise as shown by an arrow A in Fig. 5 by the action of the spring 50. In this instance, the actuator segment 44a of the lock shaft 44 of the lock device is forced to rotate counterclockwise as shown by an arrow B. This causes the rivet lock 46 to urge the latch plate 32 in the locking direction in which the latching teeth of the latch plate 32 engages the latching apertures 36 as shown in Figs. 6 and 7. Accordingly, the lock device is brought into a locked-on condition.

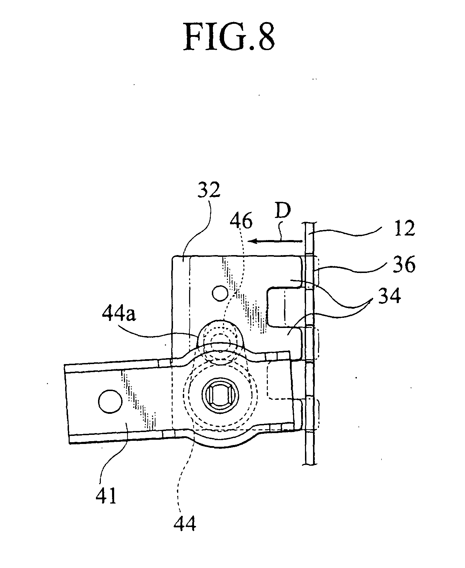

Releasing the lock device of the slide locking mechanism is effected by moving the actuating lever 41 by means of the handle such that it is forced to rotate clockwise as shown by an arrow C in Fig. 5. During this movement, the lock shaft 44 is caused to rotate in a direction opposite to the arrow A, and, at the same time, the actuator segment 44a of the lock shaft 44 is caused to rotate in a direction opposite to the arrow B. Consequently, the latch plate 32 coupled to the rivet lock 46 is released from the latching apertures 36 in a direction as shown by an arrow D in Fig. 8 and brought into the unlocked position.

According to a first feature of the slide locking mechanism discussed above, since the slide lock device has a structure in that the actuator segment 44a extends from a bottom end of the lock shaft 44 in a direction perpendicular to an axis of the lock shaft 44 and the actuator segment 44a is coupled to the latch plate 32 by means of the rivet lock 46, the latch plate 32 can be smoothly brought into the locked or unlocked positions in a highly reliable manner. Consequently, the vertical or lateral cranky movements of the upper slide rail 13 within the lower guide rail 12 can be reliably prevented, resulting in an highly improved maneuverability in operation of the slide locking mechanism.

According to a second feature of the slide locking mechanism, the slide lock device has a unique structure in that the actuator segment 44a of the lock shaft 44 and its associated components such as the rivet lock 46 serving as the linkage connecting component are accommodated within the upper slide rail 13 above an upper surface of the bottom wall 13g of the upper slide rail 13, namely, between the upper side walls 13c, 13c and the bottom wall 13f of the upper slide rail 13 as best seen in Fig. 6 and, accordingly, extraneous substances do not enter the area around the lock device from an upper area of the seat slide device 10, thereby providing a highly reliable and smooth operation in the slide lock mechanism for a long time period.

In accordance with a third feature of the slide locking mechanism, the latch plate 32 is resiliently held in contact with a lower surface of the bottom wall 13g of the upper slide rail 13 by a spring means such as the wave washer 47 and, consequently, the latch plate 32 is held in a precisely correct position relative to the latching apertures 36 even in the event that a slight dimensional inaccuracy exists in the size of the upper slide rail 13 and the lower guide rail 12. Thus, the cranky movement of the latch plate 32 is effectively prevented during lock releasing operation of the slide locking mechanism, thereby providing a smooth and reliable maneuverability.

It will now be understood from the foregoing description that, in accordance with the present invention, the seat slide device is extremely simple in structure, highly reliable in operation, high in maneuverability, easy to assemble, easy to install and low in manufacturing cost.

Although the invention has been described above by reference to certain embodiments, the invention is not limited to the embodiments described above. Modifications and variations of the embodiments described above will occur to those skilled in the art, in light of the present disclosure and within the scope of the invention as defined by the following claims.

## Claims

1. A vehicle seat slide device for a vehicle body, comprising:
an elongated lower guide rail(12) adapted to be secured to a floor of a vehicle body in a longitudinal direction thereof and including a substantially upwardly opening C-shaped channelled rail body (12a) having a bottom wall (12f), a pair of upwardly extending side walls (12b) formed at both sides of the bottom wall (12f), the rail body (12a) having a plurality of lock holes (36) formed in at least one of the side walls (12b);
an upper slide rail(13) adapted to be firmly fixed to a seat body and including a substantially downwardly opening C-channelled slide body (13a) fitted to the lower guide rail (12), for sliding movement relative to the lower guide rail (12); and
a slide locking mechanism for locking the upper slide rail (13) relative to the lower guide rail (12) and including a latch element (32), a lock shaft (44) extending through the slide body (13a) and pivotally supported thereby, the lock shaft (44) having a lower end formed with an actuator segment (44a), a linkage coupling the latch element (32) and the actuator segment (44a) of the lock shaft (44) for transverse movement of the latch element (32) relative to selected ones of the side walls (12b) of the rail body (12a), an actuating lever (41) fixedly connected to an upper end of the lock shaft (44), and a spring (50) connected to the actuating lever (41) for forcibly urging the same in a locked position in which the latch element (32) engages the selected ones of the lock holes (36), wherein operation of the actuating lever (41) against a force of the spring (50) causes the lock shaft (44) to transversely rotate the actuator segment (44a) to release the latch element(32) from the lock holes into an unlocked position,
**characterised in that** said vehicle seat slide device further comprises a pair of upper guide walls (12d) inwardly extending from upper ends of the side walls (12b) of the lower guide rail (12) to define an elongated guide groove (12e), wherein said slide body (13a) of the upper slide rail (13) has a vertical wall (13b) standing upright from a center of the slide body (13a) and a bottom wall (13g) facing the bottom wall (12f) of the rail body (12a) of the lower guide rail (12), said latch element (32) being moveably supported on a lower surface of the bottom wall (13g) of the slide body (13a) in abutting engagement therewith to selectively engage the lock holes of the rail body (12a), wherein the actuator segment (44a) is located above an upper surface of the bottom wall (13g) of the slide body (13a).

2. A vehicle seat slide device according to claim 1, wherein a substantially lower half portion of the lock shaft (44) and a linking portion of the linkage of the slide locking mechanism are accommodated in the upper slide rail (13).

3. A vehicle seat slide device according to claim 1, wherein the slide body (13a) of the upper slide rail (13) has a cutout (13f) formed on the bottom wall (13g) of the slide body (13a) for moveably accommodating the latch element (32), and wherein the slide locking mechanism further includes a spring to forcibly urge the latch element (32) in resilient contact with the lower surface of the bottom wall (13g) of the slide body (13a).

4. A vehicle seat slide device according to claim 1, wherein the lower guide rail (12) has first hook segments (15) formed at inner edges of the upper guide walls (12d) of the rail body (12a) along the elongated guide groove (12e), and the slide body (13a) of the upper slide rail (13) has first engaging segments (18) that engage the first hook segments (15) of the rail body (12a) when the upper slide rail (13) is subjected to a jerk load.

5. A vehicle seat slide device according to claim 4, wherein the lower guide rail (12) further has second hook segments (17) formed on the side walls (12b) of the rail body (12a), and the slide body (13a) of the upper slide rail (13) further has second engaging segments (19) to engage the second hook segments (17) when the upper rail is subjected to the jerk load.

6. A vehicle seat slide device according to claim 4, wherein the lower guide rail (12) has a pair of slider rest portions (12c) formed at upper ends of the side walls (12b) of the rail body (12a), and the slide body (13a) of the upper slide rail (13) has a pair of slider rest shoulders (13e) facing the slider rest portions (12c) of the lower guide rail (12).

7. A vehicle seat slide device according to claim 6, further comprising a pair of sliders (25) operatively disposed between the slider rest portions (12c) of the lower guide rail (12) and the slider rest shoulders (13e) of the upper slide rail (13).

8. A vehicle seat slide device according to claim 7, further comprising at least one roller (27) disposed between the rail body (12a) of the lower guide rail (12) and the slide body (13a) of the upper slide rail (13).

9. A vehicle seat slide device according to claim 1, wherein the lower guide rail (12) includes finisher mounting segments (21) formed at upper ends of the rail body (12a).

10. A vehicle seat slide device according to claim 9, further comprising a pair of finishers (23) fixedly supported by the finisher mounting segments (21) and held in sliding contact with the vertical wall (13b) of the upper slide rail (13).

## Patentansprüche

1. Fahrzeugsitzschiebevorrichtung für eine Fahrzeugkarosserie, umfassend:
- eine verlängerte untere Führungsschiene (12), die angepasst ist, um an einen Boden von einer Fahrzeugkarosserie in einer longitudinalen Richtung davon befestigt zu werden und die einen im Wesentlichen aufwärts gerichteten sich öffnenden C-geformten genuteten Schienenkörper (12a) einschließt, der eine Bodenwand (12f) und ein Paar von aufwärts sich erstreckenden Seitenwänden (12b) aufweist, die an beiden Seiten der Bodenwand (12f) ausgebildet sind, wobei der Schienenkörper (12a) eine Vielzahl von Arretierungslöchern (36) aufweist, die in zumindest einer der Seitenwände (12b) ausgebildet sind;
- eine obere Schiebeschiene (13), die angepasst ist, um fest an einem Sitzkörper befestigt zu werden und die einen im Wesentlichen abwärts gerichteten, sich öffnenden C-förmig genuteten Schiebekörper (13a)einschließt, der an die untere Führungsschiene (12) zur schiebenden Bewegung relativ an der unteren Führungsschiene (12) eingepasst ist; und
- ein schiebearretierender Mechanismus zum Arretieren der oberen Schiebeschiene (13) relativ zur unteren Führungsschiene (12) und der ein Klinkenelement (32), einen Arretierungsschaft (44), der sich durch den Schiebekörper (13a) erstreckt und schwenkbar dadurch getragen wird, wobei der Arretierungsschaft (44) ein unteres Ende aufweist, das mit einem Betätigungssegment (44a) ausgebildet ist, eine Verbindung, die das Klinkenelement (32) und das Betätigungssegment (44a) des Arretierungsschafts (44) zur Querbewegung des Klinkenelements (32) relativ an einer der ausgewählten Seitenwände (12b) vom Schienenkörper (12a) koppelt, einen betätigenden Hebel (41), der mit einem oberen Ende des Arretierungsschafts (44) unbeweglich verbunden ist und eine Feder (50) einschließt, die mit dem betätigenden Hebel (41) verbunden ist, um den gleichen in eine arretierte Position mit Kraft zu drängen, in der das Klinkenelement (32) in das ausgewählte Loch der Arretierungslöcher (36) eingreift, wobei der Betrieb des Betätigungshebels (41) gegen eine Kraft der Feder (50) den Arretierungsschaft (44) veranlasst, das Betätigungssegment (44a) quer zu drehen, um das Klinkenelement (32) aus den Arretierungslöchern in eine entriegelte Position freizugeben, **dadurch gekennzeichnet, dass** die Fahrzeugsitzschiebevorrichtung ferner ein Paar von oberen Führungswänden (12d) umfasst, die sich nach innen von oberen Enden der Seitenwände (12b) von der unteren Führungsschiene (12) erstrecken, um verlängerte Führungsnuten (12e) zu definieren, wobei der Schiebekörper (13a) von der oberen Schiebeschiene (13) eine vertikale Wand (13b) aufweist, die aufrecht von einem Mittelpunkt vom Schiebekörper (13a) steht und eine Bodenwand (13g) der Bodenwand (12f) des Schienenkörpers (12a) der unteren Führungsschiene (12) gegenübersteht, wobei das Klinkenelement (32) auf einer unteren Oberfläche von der Bodenwand (13g) des Schiebekörpers (13a) in einem anstoßenden Eingriff damit bewegbar getragen wird, um in die Arretierungslöcher vom Schienenkörper (12a) selektiv einzugreifen, wobei das Betätigungssegment (44a) über einer oberen Oberfläche von der Bodenwand (13g) vom Schiebekörper (13a) positioniert ist.

2. Fahrzeugsitzschiebevorrichtung gemäß Anspruch 1, wobei ein im Wesentlichen unterer Halbabschnitt vom Arretierungsschaft (44) und ein Verbindungsabschnitt von der Verbindung des schiebearretierenden Mechanismuses in der oberen Schiebeschiene (13) aufgenommen sind.

3. Fahrzeugsitzschiebevorrichtung gemäß Anspruch 1, wobei der Schiebekörper (13a) von der oberen Schiebeschiene (13) einen Ausschnitt (13f) aufweist, der auf der Bodenwand (13g) vom Schiebekörper (13a) zur bewegbaren Aufnahme des Klinkenelements (32) ausgebildet ist, und wobei der schiebearretierende Mechanismus ferner eine Feder einschließt, um das Klinkenelement (32) in einem elastischen Kontakt mit der unteren Oberfläche der Bodenwand (13g) vom Schiebekörper (13a) mit Kraft zu drängen.

4. Fahrzeugsitzschiebevorrichtung gemäß Anspruch 1, wobei die untere Führungsschiene (12) erste Hakensegmente (15) aufweist, die an inneren Kanten der oberen Führungswände (12d) vom Schienenkörper (12a) entlang der verlängerten Führungsnut (12e) ausgebildet sind und der Schiebekörper (13a) der oberen Schiebeschiene (13) erste eingreifende Segmente (18) aufweist, die in die ersten Hakensegmente (15) vom Schienenkörper (12a) eingreifen, wenn die obere Schiebeschiene (13) einer Stoßbelastung ausgesetzt ist.

5. Fahrzeugsitzschiebevorrichtung gemäß Anspruch 4, wobei die untere Führungsschiene (12) femer zweite Hakensegmente (17) aufweist, die auf den Seitenwänden (12b) vom Schienenkörper (12a) ausgebildet sind und der Schiebekörper (13a) der oberen Schiebeschiene (13) femer zweite eingreifende Segmente (19) aufweist, um die zweiten Hakensegmente (17) einzugreifen, wenn die obere Schiene der Stoßbelastung ausgesetzt ist.

6. Fahrzeugsitzschiebevorrichtung gemäß Anspruch 4, wobei die untere Führungsschiene (12) ein Paar von Läuferauflagerabschnitten (12c) aufweist, die an oberen Enden von den Seitenwänden (12b) vom Schienenkörper (12a) ausgebildet sind und der Schiebekörper (13a) der oberen Schiebeschiene (13) ein Paar von Läuferauflagerschultern (13e) aufweist, die den Läuferauflagerabschnitten (12c) von der unteren Führungsschiene (12) gegenüberstehen.

7. Fahrzeugsitzschiebevorrichtung gemäß Anspruch 6, ferner umfassend ein Paar von Läufern (25), die im Betrieb zwischen den Stückauflagerabschnitten (12c) von der unteren Führungsschiene (12) und den Läuferauflagerschultern (13e) der oberen Schiebeschiene (13) angeordnet sind.

8. Fahrzeugsitzschiebevorrichtung gemäß Anspruch 7, ferner umfassend zumindest eine Walze (27), die zwischen dem Schienenkörper (12a) von der unteren Führungsschiene (12) und dem Schiebekörper (13a) von der oberen Schiebeschiene (13) angeordnet ist.

9. Fahrzeugsitzschiebevorrichtung gemäß Anspruch 1, wobei die untere Führungsschiene (12) Fertigmontagesegmente (21) einschließt, die an oberen Enden vom Schienenkörper (12a) ausgebildet sind.

10. Fahrzeugsitzschiebevorrichtung gemäß Anspruch 9, ferner umfassend ein Paar von Abschlußstücken (23), die von den Fertigmontagesegmenten (21) unbeweglich getragen und in gleitendem Kontakt mit der vertikalen Wand (13b) von der oberen Schiebeschiene (13) gehalten werden.

## Revendications

1. Dispositif de coulissement de siège de véhicule pour une carrosserie de véhicule, comprenant :
un rail de guidage inférieur allongé (12) conçu pour être assujetti à un plancher d'une carrosserie de véhicule, suivant sa direction longitudinale, et incluant un corps de rail en canal en forme de C s'ouvrant sensiblement vers le haut (12a) comportant une paroi inférieure (12f), une paire de parois latérales s'étendant vers le haut (12b) formées aux deux côtés de la paroi inférieure (12f), le corps de rail (12a) présentant une pluralité de trous de blocage (36) formés dans au moins l'une des parois latérales (12b);
un rail de coulissement supérieur (13) conçu pour être fermement fixé à un corps de siège et incluant un corps de coulissement en canal en forme de C s'ouvrant sensiblement vers le bas (13a) monté sur le rail de guidage inférieur (12), en vue d'un mouvement de coulissement par rapport au rail de guidage inférieur (12) ; et un mécanisme de blocage latéral pour bloquer le rail de coulissement supérieur (13) par rapport au rail de guidage inférieur (12) et incluant un élément de verrou (32), un arbre de blocage (44) s'étendant à travers le corps de coulissement (13a) et supporté ainsi en pivotement, l'arbre de blocage (44) comportant une extrémité inférieure formée d'un segment d'actionneur (44a), une liaison couplant l'élément de verrou (32) et le segment d'actionneur (44a) de l'arbre de blocage (44) en vue d'un mouvement transversal de l'élément de verrou (32) par rapport à celles, sélectionnées, des parois latérales (12b) du corps de rail (12a), un levier d'actionnement (41) raccordé fixement à une extrémité supérieure de l'arbre de blocage (44), et un ressort (50) raccordé au levier d'actionnement (41) pour pousser, de façon forcée, ce dernier dans une position bloquée dans laquelle l'élément de verrou (32) met en prise ceux, sélectionnés, des trous de blocage (36), dans lequel la mise en oeuvre du levier d'actionnement (41), à l'encontre d'une force du ressort (50), amène l'arbre de blocage (44) à faire tourner transversalement le segment d'actionneur (44a) afin de libérer l'élément de verrou (32), depuis les trous de blocage à une position débloquée,
**caractérisé en ce que** ledit dispositif de coulissement de siège de véhicule comprend, en outre, une paire de parois de guidage supérieures (12d) s'étendant vers l'intérieur à partir des extrémités supérieures des parois latérales (12b) du rail de guidage inférieur (12) afin de définir une rainure de guidage allongée (12e), dans lequel ledit corps de coulissement (13a) du rail de coulissement supérieur (13) comporte une paroi verticale (13b) se dressant depuis un centre du corps de coulissement (13a) et une paroi inférieure (13g) tournée vers la paroi inférieure (12f) du corps de rail (12a) du rail de guidage inférieur (12), ledit élément de verrou (32) étant supporté, de façon mobile, sur une surface inférieure de la paroi inférieure (13g) du corps de coulissement (13a), en engagement de butée avec celle-ci, pour mettre en prise, sélectivement, les trous de blocage du corps de rail (12a), dans lequel le segment d'actionneur (44a) est situé au-dessus d'une surface supérieure de la paroi inférieure (13g) du corps de coulissement (13a).

2. Dispositif de coulissement de siège de véhicule selon la revendication 1, dans lequel une demi-partie sensiblement inférieure de l'arbre de blocage (44) et une partie de liaison de la liaison du mécanisme de blocage de coulissement sont reçues dans le rail de coulissement supérieur (13).

3. Dispositif de coulissement de siège de véhicule selon la revendication 1, dans lequel le corps de coulissement (13a) du rail de coulissement supérieur (13) présente une découpe (13f) formée sur la paroi inférieure (13g) du corps de coulissement (13a) pour recevoir, de façon mobile, l'élément de verrou (32), et dans lequel le mécanisme de blocage de coulissement inclut, en outre, un ressort pour pousser, de façon forcée, l'élément de verrou (32) en contact résilient avec la surface inférieure de la paroi inférieure (13g) du corps de coulissement (13a).

4. Dispositif de coulissement de siège de véhicule selon la revendication 1, dans lequel le rail de guidage inférieur (12) comporte des premiers segments de crochets (15) formés à des bords internes des parois de guidage supérieures (12d) du corps de rail (12a), le long de la rainure de guidage allongée (12e), et le corps de coulissement (13a) du rail de coulissement supérieur (13) comporte des premiers segments de mise en prise (18) qui mettent en prise les premiers segments de crochets (15) du corps de rail (12a) lorsque le rail de coulissement supérieur (13) est soumis à une charge induite par secousse.

5. Dispositif de coulissement de siège de véhicule selon la revendication 4, dans lequel le rail de guidage inférieur (12) comporte, en outre, des seconds segments de crochets (17) formés sur les parois latérales (12b) du corps de rail (12a), et le corps de coulissement (13a) du rail de coulissement supérieur (13) comporte, en outre, des seconds segments de mise en prise (19) pour mettre en prise les seconds segments de crochets (17) lorsque le rail de coulissement supérieur est soumis à la charge induite par secousse.

6. Dispositif de coulissement de siège de véhicule selon la revendication 4, dans lequel le rail de guidage inférieur (12) comporte une paire de parties de repos de pièces coulissantes (12c) formées aux extrémités supérieures des parois latérales (12b) du corps de rail (12a), et le corps de coulissement (13a) du rail de coulissement supérieur (13) comporte une paire d'épaulements de repos de pièces coulissantes (13e) tournées vers les parties de repos de pièces coulissantes (12c) du rail de guidage inférieur (12).

7. Dispositif de coulissement de siège de véhicule selon la revendication 6, comprenant, en outre, une paire de pièces coulissantes (25) disposées, en fonctionnement, entre les parties de repos de pièces coulissantes (12c) du rail de guidage inférieur (12) et les épaulements de repos de pièces coulissantes (13e) du rail de coulissement supérieur (13).

8. Dispositif de coulissement de siège de véhicule selon la revendication 7, comprenant, en outre, au moins un rouleau (27) disposé entre le corps de rail (12a) du rail de guidage inférieur (12) et le corps de coulissement (13a) du rail de coulissement supérieur (13).

9. Dispositif de coulissement de siège de véhicule selon la revendication 1, dans lequel le rail de guidage inférieur (12) inclut des segments de montage de pièces de finition (21) formés aux extrémités supérieures du corps de rail (12a).

10. Dispositif de coulissement de siège de véhicule selon la revendication 9, comprenant, en outre, une paire de pièces de finition (23) supportées, de façon fixe, par les segments de montage de pièces de finition (21) et tenues en contact de coulissement avec la paroi verticale (13b) du rail de coulissement supérieur (13).
